(19) Europäisches Patentamt
European Patent Office
Office européen des brevets

(11) **EP 3 379 940 B1**

(12) **FASCICULE DE BREVET EUROPEEN**

(45) Date de publication et mention
de la délivrance du brevet:
**12.07.2023 Bulletin 2023/28**

(21) Numéro de dépôt: **16810452.9**

(22) Date de dépôt: **22.11.2016**

(51) Classification Internationale des Brevets (IPC):
**A23K 40/35** (2016.01)    **A23K 50/10** (2016.01)
**A23K 20/10** (2016.01)

(52) Classification Coopérative des Brevets (CPC):
(C-Sets disponibles)
**A23K 40/35; A23K 20/10; A23K 50/10;**
A23K 20/189; A23K 20/30; A23V 2002/00    (Cont.)

(86) Numéro de dépôt international:
**PCT/IB2016/001651**

(87) Numéro de publication internationale:
**WO 2017/089881 (01.06.2017 Gazette 2017/22)**

(54) **ADDITIF ALIMENTAIRE, PROCEDE DE PREPARATION ET UTILISATION POUR AMELIORER LES PERFORMANCES ZOOTECHNIQUES D'UN RUMINANT**

FUTTERZUSATZMITTEL, VERFAHREN ZUR DESSEN HERSTELLUNG, UND VERWENDUNG ZUR VERBESSERUNG DER ZOOTECHNISCHEN LEISTUNG VON WIEDERKAÜERN

FOOD ADDITIVE, PROCESS FOR ITS PRODUCTION, AND ITS USE TO IMPROVE ZOOTECHNICAL PERFORMANCE IN RUMINANTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **25.11.2015  FR 1502465**

(43) Date de publication de la demande:
**03.10.2018  Bulletin 2018/40**

(73) Titulaire: **Pancosma S.A.**
**1218 Le Grand-Saconnex (CH)**

(72) Inventeurs:
  • **BRAVO, David**
    **1400 Yverdon-les-Bains (CH)**
  • **WALL, Emma**
    **Burlington,**
    **Vermont 05401 (US)**

(74) Mandataire: **Stona, Daniel**
**Mervelix Sàrl**
**Rue de Monthoux 55**
**1201 Genève (CH)**

(56) Documents cités:
WO-A1-2015/197719    WO-A1-2016/126683
WO-A2-2008/062368    FR-A1- 2 849 992
US-A- 5 676 966

• ERIC S VANZANT ET AL: "Standardization of In Situ Techniques for Ruminant Feedstuff Evaluation 1,2 Introduction", J. ANIM. SCI., vol. 76, no. October, 1 janvier 1998 (1998-01-01), pages 2717-2729, XP055336910,
• FERNANDO SPILLER ET AL: "Anti-inflammatory effects of red pepper ( Capsicum baccatum ) on carrageenan- and antigen-induced inflammation", JOURNAL OF PHARMACY AND PHARMACOLOGY, vol. 60, no. 4, 1 avril 2008 (2008-04-01), pages 473-478, XP055098912, ISSN: 0022-3573, DOI: 10.1211/jpp.60.4.0010
• KWON DAE YOUNG ET AL: "Capsiate improves glucose metabolism by improving insulin sensitivity better than capsaicin in diabetic rats", JOURNAL OF NUTRITIONAL BIOCHEMISTRY, BUTTERWORTH PUBLISHERS, STONEHAM, GB, vol. 24, no. 6, 29 septembre 2012 (2012-09-29), pages 1078-1085, XP028564199, ISSN: 0955-2863, DOI: 10.1016/J.JNUTBIO.2012.08.006

- **Eric S Vanzant ET AL: "Standardization of In Situ Techniques for Ruminant Feedstuff Evaluation 1,2 Introduction", Exp. Sta. Manhattan. 3 Anim. Sci. Sci. and Ind. Received October J. Anim. Sci, 1 January 1998 (1998-01-01), pages 40546-2152717, XP055336645, DOI: doi: 10.2527/1998.76102717x Retrieved from the Internet: URL:https://pubmed.ncbi.nlm.nih.gov/981491 5/ [retrieved on 2017-01-18]**
- **Essi Evans ET AL: "Methods to Evaluate Rumen Protected Lysine for Dairy Cows", Open Journal of Animal Sciences, vol. 05, no. 04, 1 January 2015 (2015-01-01), pages 495-499, XP055336635, ISSN: 2161-7597, DOI: 10.4236/ojas.2015.54051**

(52) Classification Coopérative des Brevets (CPC): (Cont.)

C-Sets
A23V 2002/00, A23V 2200/224, A23V 2200/324, A23V 2200/328, A23V 2250/21

## Description

L'invention concerne un additif alimentaire.

Cet additif alimentaire est destiné, notamment, à être utilisé pour améliorer les performances zootechniques d'un ruminant.

### Arrière-plan de l'invention

La nutrition et l'alimentation des animaux ruminants sont basées sur la reconnaissance de la symbiose ruminale. Le rumen, positionné avant l'estomac et l'intestin, abrite un écosystème microbien. Grâce à cet écosystème, l'animal ruminant utilise des substrats qu'il ne pourrait pas employer sinon. L'exemple le plus commun est l'utilisation des fibres alimentaires par un ruminant. Son écosystème ruminal les digère, puis les fermente. La fermentation libère des sous-produits de fermentation, les acides gras volatils, qui sont absorbés par le ruminant qui les utilise comme substrat énergétique. On estime à 60% l'énergie qu'une vache laitière, par exemple, utilise qui est d'origine microbienne. L'écosystème du rumen en se multipliant produit aussi des protéines microbiennes. Les bactéries lorsqu'elles sont évacuées en dehors du rumen, sont digérés puis absorbés par les parties basses du tube digestif, en premier lieu l'intestin.

Pour ce qui est de la nutrition et l'alimentation du ruminant, on raisonne généralement en termes d'optimisation des fermentations ruminales. Des travaux ont montré qu'il peut être intéressant nutritionnellement d'apporter des sources de nutriments qui puissent échapper aux processus de digestion et de fermentation ruminaux et être absorbés par l'intestin. C'est le cas de nutriments comme les acides aminés.

La demande internationale publiée sous le numéro WO2008/062368 décrit un procédé pour préparer un additif alimentaire ou une ration alimentaire d'animal contenant un agent actif ayant au moins un capsaïcinoïde, ce procédé comprenant une étape d'atomisation à froid en atmosphère gazeuse, ou de granulation en atmosphère gazeuse à lit d'air fluidisé, d'un mélange liquide d'une matière grasse d'encapsulation et de l'agent actif contenant au moins un capsaïcinoïde, produisant des particules solides dudit mélange. Est également décrit dans cette demande un aliment pour animal contenant des particules solides à base de capsaïcinoïdes encapsulés dans une matière grasse, dans lequel, dans les particules solides, est présente une oléorésine de capsicum en proportion en poids d'au moins 2,5%, avantageusement d'au moins 5%, plus avantageusement d'environ 20%.

Le brevet étasunien numéro US 5 676 966 propose une composition pour l'alimentation des ruminants, comprenant un noyau revêtu d'une composition d'enrobage, dans laquelle le noyau comprend une substance biologiquement active, ladite composition d'enrobage comprenant de 65 à 90% en poids d'un constituant (A) qui comprend au moins une substance protectrice hydrophobe choisie dans le groupe constitué par les huiles et les graisses animales ou végétales durcies, les graisses animales ou végétales et un ester d'acide gras, 2 à 10% d'un constituant (B) qui est un surfactant compatible avec ladite substance protectrice hydrophobe (A) et 8 à 30% d'un constituant (C) qui est une poudre de talc, ce talc étant sous la forme d'une poudre fine ayant un diamètre granulaire moyen de 40 $\mu$m ou moins.

Le but principal de l'invention est de proposer un additif alimentaire. Celui-ci est défini par les revendications.

Cet additif alimentaire est destiné à être utilisé pour améliorer les performances zootechniques d'un ruminant.

Plus précisément, l'additif alimentaire, qui est constitué d'un non-nutriment ou d'une combinaison de non-nutriments, ou qui contient au moins un non-nutriment ou une combinaison de non-nutriments, et qui est capable d'atteindre pour une certaine proportion l'abomasum ou caillette, est introduit dans l'abomasum/intestin du ruminant, en aval du rumen.

L'introduction peut donc être réalisée par passage de l'additif alimentaire à travers le rumen.

Le ou les non-nutriment (s) est/sont incorporé(s) dans une matrice, l'ensemble étant encapsulé par un enrobage comprenant au moins une matière végétale dont l'indice de saponification est supérieur à 180, plus préférentiellement supérieur à 190. Selon l'invention, ledit non-nutriment comprend de l'oléorésine de capsicum, et ladite matrice comprend une graisse hydrogénée.

Par non-nutriment, on entend un composé (molécule ou organisme vivant) qui ne présente pas d'effet nutritionnel par lui-même. Ceci signifie qu'il n'est pas vital pour l'animal qui le consomme. Cependant, le non-nutriment est capable d'affecter le métabolisme, l'endocrinologie et/ou l'immunité de l'animal, soit de manière directe (par l'activation d'un récepteur membranaire par exemple), soit de manière indirecte (en modulant la composition de sa flore intestinale, la viscosité de l'aliment ou en favorisant l'accès à certains nutriments dans le tractus digestif par exemple).

Les inventeurs ont en effet découvert avec surprise qu'il était possible d'affecter le métabolisme et l'immunité d'un ruminant et donc d'améliorer ses performances zootechniques, en faisant parvenir des non-nutriments non pas dans son rumen, où ils seront dégradés et utilisés, mais en aval du rumen.

Ainsi, l'invention a trait à un additif alimentaire contenant au moins un non-nutriment incorporé dans une matrice, l'ensemble étant encapsulé par un enrobage comprenant au moins une matière végétale dont l'indice de saponification est supérieur à 180 et le non-nutriment comprenant de l'oléorésine de capsicum, cet additif alimentaire se caractérisant en ce que la matrice comprend une graisse hydrogénée.

L'invention se rapporte également à l'utilisation non-thérapeutique de l'additif alimentaire pour améliorer les performances zootechniques d'un ruminant, notamment, l'une au moins des performances suivantes : la production laitière, la qualité du lait, la modification de la composition du lait, la modification de la consommation d'aliment, la modification du comportement alimentaire, l'amélioration du gain de poids moyen et l'augmentation de l'efficacité alimentaire.

D'autres caractéristiques et avantages de l'invention vont maintenant être décrits en détail dans l'exposé suivant qui est donné en référence à l'unique figure annexée, laquelle représente schématiquement la comparaison des améliorations de la production laitière apportée par la supplémentation d'additifs alimentaires NR/NN1 et NR/NN2, par rapport à un témoin.

### Exposé détaillé de l'invention

L'exposé « en aval du rumen » se réfère au sens du transit des aliments à l'intérieur de l'appareil digestif du ruminant. Par exemple, l'estomac (aussi appelé caillette) est situé en aval du rumen ; l'intestin se situe en aval de l'estomac.

Les non-nutriments peuvent être d'une nature très variée. Il peut s'agir d'extraits de plantes et/ou de leurs composés actifs (d'origine naturelle, partiellement naturelle ou totalement synthétique), des arômes, des pré-biotiques, des pro-biotiques, des molécules édulcorantes, des enzymes (en particulier de la famille des amylases), de formes non nutritionnelles de métaux ou de minéraux.

Selon l'invention définie plus haut, le non-nutriment comprend de l'oléorésine de capsicum. Selon un mode de réalisation préféré de l'invention, le non-nutriment est une oléorésine de capsicum (incluant les capsaïcinoïdes, capsaïcine et dihydrocapsaïcine).

Le ou les non-nutriments sont incorporés dans une matrice formant un noyau de produit qui est enrobé dans un second temps.

La matrice peut comprendre au moins un composé choisi parmi la maltodextrine, l'amidon natif ou modifié, la gomme arabique, la gomme guar, une lécithine, l'acide alginique ou ses dérivés, l'agar, la gomme de caroube, la gomme xanthane, le sorbitol ou ses dérivés, le mannitol, le glycérol, une pectine, un alginate, une carraggénane, la cellulose ou l'un de ses dérivés, une saponine, une graisse hydrogénée, un glycéride d'acide gras ou un de ses dérivés, une huile hydrogénée de colza, de l'huile de palme, de l'huile de soja, de l'huile de palme, de l'huile d'arachide, de l'huile de son de riz, de l'huile de graines de coton, de l'huile de tournesol, de l'huile de carthame. Selon l'invention, la matrice comprend une graisse hydrogénée.

Bien entendu, on peut utiliser un mélange de deux au moins de ces composés, en toutes proportions.

De préférence 85% (en poids) des particules de non-nutriment + matrice + enrobage ont une taille comprise entre 400 et 1600 microns.

L'additif alimentaire selon l'invention se présente en général sous forme de particules ou granulés. Le produit obtenu a généralement, pour 85% des particules, une taille comprise entre 400 et 1500 micromètres.

Selon un mode de réalisation préféré de l'invention, l'additif alimentaire est ingéré par le ruminant, le ou les non-nutriments étant encapsulés d'une manière spéciale, à savoir, dans un enrobage résistant au passage dans le rumen.

L'enrobage peut être constitué d'un matériau comprenant un composé choisi dans la liste fournie ci-dessus pour la matrice, ou un mélange de deux au moins de ces composés, en toutes proportions. Selon l'invention, l'enrobage comprend au moins une matière végétale dont l'indice de saponification est supérieur à 180.

De préférence, on utilise comme enrobage une huile de palme.

L' additif alimentaire est normalement constitué :

- de 0,5 à 70% en poids de noyau;
- le complément à 100% étant l'enrobage.

L'additif selon l'invention comprend préférentiellement au moins 5% et au plus 70% en poids de non-nutriments.

### Préparation de l'additif

Par formulation, il faut entendre ici la nature du ou des non-nutriments ou composé, de l'éventuelle matrice et de l'enrobage, ainsi que les proportions de ces composés dans l'additif alimentaire.

Cet additif alimentaire est de préférence préparé préalablement selon le procédé suivant :

Point a). On choisit au moins un non-nutriment, qui selon l'invention comprend de l'oléorésine de capsicum;

Point b). On évalue si le non-nutriment est dégradé dans le rumen lorsqu'il est non protégé. La méthode employée ici est décrite dans le paragraphe ci-après intitulé « point méthodologique sur la dégradation dans le rumen » et nommée méthode I. Cette méthode aboutit au calcul du paramètre DRNN-P qui décrit la disparition d'un non-nutriment dans le rumen lorsqu'il est pur.

Point c). Le paramètre DRNN-P permet de déterminer si le non-nutriment est naturellement protégé des dégradations dans le rumen. Le seuil de DRNN-P au-delà duquel le non-nutriment est considéré comme dégradé, appelé premier seuil, est de préférence de 40%, et en particulier de 30%. Si ce premier seuil est dépassé, cela signifie que la part de non-nutriment dégradé dans le rumen est trop importante, alors on passe au point e).

Point e). On choisit au moins un composé formant matrice pour le ou les non-nutriments. Selon l'invention, la matrice comprend une graisse hydrogénée.

Point f). On choisit au moins un composé d'enrobage. Selon l'invention, celui-ci comprend au moins une matière végétale dont l'indice de saponification est supérieur à 180.

Point g). On enrobe le ou les non-nutriments et le ou les composés formant matrice au moyen du ou des composés d'enrobage et d'une manière permettant d'obtenir des particules.

Point h). On mesure la stabilité du ou des non-nutriments contenus dans ces particules dans un rumen. La méthode employée ici est décrite dans le paragraphe ci-après intitulé « point méthodologique sur la dégradation dans le rumen » et dénommée méthode II. Cette méthode permet de calculer un paramètre DRNN-E qui décrit la disparition des particules constituées de non-nutriment(s) et de l'éventuelle matrice enrobé(s) dans le rumen.

Point i). Le seuil de DRNN-E en deçà duquel on considère que le non-nutriment est protégé, appelé deuxième seuil, est de préférence de 60%. Si le résultat obtenu de DRNN-E est supérieur à ce deuxième seuil, on considère que le produit est trop dégradé et retourne au point e).

Point j). Si le seuil de DRNN-E est inférieur ou égal au deuxième seuil, on adopte la formulation des particules enrobées pour préparer les particules à utiliser comme additif alimentaire selon l'invention.

## POINT MÉTHODOLOGIQUE SUR LA DÉGRADATION DANS LE RUMEN

### Méthode I : mesure de la dégradation d'un non-nutriment dans le rumen

Cinq vaches de race Holstein munies de canules de 10 cm pénétrant dans le rumen sont utilisées pour l'expérience. Cr-EDTA est employé comme marqueur de transit du liquide ruminal. Au moment de l'alimentation des animaux, 5 kg du contenu ruminal sont prélevés par la canule, mélangés avec des quantités données du non-nutriment en question et de Cr-EDTA puis réintroduits dans le rumen.

Des échantillons de contenu ruminal sont collectés dans 5 parties du rumen (ventral, dorsal, réticulum et 2 parmi la matière alimentaire présente dans le rumen) juste après la réintroduction du contenu ruminal (soit à t = 0 pris comme témoin), après 30 minutes, 1, 2, 6, 12 et 24 heures après. Les échantillons prélevés sont congelés à -20°C, lyophilisés, broyés à la taille de 1 mm et analysés pour le contenu en Cr par UPLC-MS/MS avec un spectre de masse triple quadrupole (Water Xevo, Waters Corporation, Midford, MA). La teneur en non-nutriment est analysée avec une méthode adéquate.

Les teneurs résiduelles en chrome ou en non-nutriment sont utilisées dans une modélisation non linéaire avec l'équation suivante : $Y = Y_0 + a \times \exp[-B * x]$; dans laquelle Y est la teneur résiduelle en chrome ou en non nutriment et X est le temps. Pour le chrome ou le non-nutriment, cette équation donne un paramètre B qui est le taux de disparition du chrome dans le rumen (B/chrome) ou le taux de disparition du non-nutriment dans le rumen (B/non-nutriment).

Le % de dégradation dans le rumen du non-nutriment (DRNN-P) est calculé de la façon suivante :

```
DRNN-P = 100 - (B/chrome ÷ B/non-nutriment) x 100
```

### Méthode II : mesure de la libération des non-nutriments contenus dans un additif dans le rumen

Trois vaches Holstein présentant des canules ruminales sont utilisées pour l'expérimentation. Des sacs en polyester (5 × 10 cm, porosité de 50 micromètres, Ankom Technology, Macedon, NY) renfermant 5 g du produit contenant le non-nutriment par sac sont incubés en triplicatas dans chacune des vaches pendant 0, 1, 3, 6 et 12 heures. Les sacs sont introduits dans le rumen de manière séquentielle puis ressortis simultanément.

Après l'incubation, les sacs sont lavés à l'eau froide puis lyophilisés. Les résidus sont analysés pour leurs contenus en actifs par UPLC-MS/MS avec un spectre de masse triple quadrupole (Waters Xevo; Waters Corporation, Midford, MA) .

Le taux de disparition du non-nutriment d'un produit encapsulé (DRNN-E) est calculé sur la base des valeurs obtenues après 6h d'incubation à partir de l'équation suivante :

```
DRNN-E = (non-nutriment dans le produit au départ - non-
nutriment dans le résidu du produit à 6h) ÷ (non-nutriment
dans le produit au départ) x 100
```

Compléments

Les extraits de plantes contiennent des substances chimiques présentes naturellement dans les plantes. Pour les animaux, ces extraits de plantes peuvent être des non-nutriments. Ceux-ci sont connus pour avoir des propriétés antibactériennes, antifongiques et antimicrobiennes bien décrites dans la pharmacopée.

A titre exemple d'extrait de plante ou leurs composés actifs, on peut citer l'anéthol, une oléorésine de capsicum (incluant les capsaicinoïdes, capsaicine et dihydrocapsaïcine), la vanilline, le cinnamaldéhyde (aldéhyde cinnamique), le carvacrol, l'eugénol, un extrait d'ail, du thiosulfinate ou thiosulfonate d'un alkyle tel que le propyle, une teinture d'ail, une oléorésine de gingembre, de l'huile essentielle de gingembre, du gingérol, du thymol, une oléorésine de curcuma, des curcuminoïdes. Bien entendu, on peut utiliser des mélanges de deux au moins de ces composés et/ou extraits, en toutes proportions. Selon l'invention, le non-nutriment comprend de l'oléorésine de capsicum.

Chez les ruminants (bovin, ovins, caprins), les extraits de plante ont été utilisés afin de modifier directement la flore microbienne du rumen. En effet ces extraits de plantes ont des propriétés antibactériennes très connues. Chez les ruminants, ils modifient les équilibres microbiens de l'écosystème du rumen dans le but d'optimiser la fermentation ruminale et, par voie de conséquence, d'augmenter la production de lait et de viande. En effet, la modification de la microflore permet la production d'un acide gras volatil énergétiquement plus efficace (l'acide propionique) que celui normalement le plus abondant (l'acide acétique).

L'effet bénéfique de ces changements microbiens sur la production de l'animal en réponse à l'incorporation d'extraits de plante libérés majoritairement dans le rumen est très documenté.

En outre, il a été observé que la libération directement dans l'abomasum ou caillette, après le rumen, de ces extraits de plantes provoque une forte réaction inflammatoire et diminue les performances zootechniques des ruminants (production de viande ou de lait). Cette observation supprime l'intérêt de l'utilisation chez des ruminants d'extraits de plante en dehors d'un effet direct sur l'écosystème du rumen.

Les inventeurs ont montré que ces composés sont également actifs en aval du rumen et de surcroît, à des doses bien plus faibles. Cette découverte permet d'employer des quantités bien moins importantes d'extrait de plante par rapport à ce qui s'est fait jusqu'à présent afin d'obtenir une amélioration des performances des ruminants par rapport aux applications classiques précédentes de ce type de composés.

L'additif alimentaire (non dilué par ajout d'un support inerte) peut être ajouté à la ration alimentaire de l'animal, dans une plage allant de 0.01 à 2500 mg par kg d'aliment et/ou de 1 à 1000 mg/tête/jour.

L'invention peut s'appliquer à tous les ruminants, en particulier, les bovins, les ovins et les caprins.

Comme exemples des performances zootechniques que l'invention permet d'améliorer, on peut citer la production laitière, la qualité du lait, la modification de la composition du lait, la modification de la consommation des aliments, la modification du comportement alimentaire, l'amélioration du gain de poids moyen, l'augmentation de l'efficacité alimentaire, l'amélioration de la sensibilité de l'appareil digestif à l'insuline, l'amélioration de la santé digestive et l'amélioration de l'immunité.

**Exemple 1**

Cet exemple illustre le mode de préparation de l'additif alimentaire selon le mode de réalisation préféré de l'invention décrit plus haut en prenant comme exemple des extraits de plantes.

Point a)

On choisit deux non-nutriments qui sont des extraits de plante contenus dans une oléorésine de capsicum. Il s'agit de la capsaïcine et de la dihydrocapsaïcine (ci-après « CDC »).

Point b)

La méthode I est appliquée à la dégradation de CDC dans le rumen.
Les résultats de cette étude conduisent à :

- taux de disparition du chrome = 0.24
- taux de disparition de CDC = 1.2

$$DRNN-P = 100 - (0.24 \div 1.2) \times 100 = 80\%$$

Point c)

La DRNN-P obtenue est de 80%. Elle est supérieure à la valeur seuil de DRNN-P (40 ou 30%) . Dès lors, l'extrait de plante est dégradé dans le rumen, alors on passe au point e) .

Point e), f), g)

On choisit au moins un composé d'enrobage qui est de l'huile de colza hydrogénée. Les extraits de plante sont enrobés selon la méthode décrite dans la demande internationale EP2088871 (US20100055253; WO2008062368). Il s'agit d'une atomisation à froid permettant d'enrober ou encapsuler 22% d'oléorésine de capsicum dans une matrice de 78% d'huile de colza hydrogénée.
On peut notamment procéder comme suit. L'oléorésine de capsicum est incorporée dans une matrice de graisse de colza hydrogénée dont le point de fusion est compris entre 66 et 72°C. On produit ensuite des premières particules à l'aide d'un système d'atomisation à froid. La teneur en oléorésine de capsicum de ces premières particules est comprise entre 18 et 22%, avec une cible à 20%.
La densité de ces particules est comprise entre 0,40 et 0,52 $g/cm^3$, leur point de fusion est supérieur à 58°C et leur taille moyenne est comprise entre 400 et 600 microns. 85% de ces particules ont une taille comprise entre 200 et 1000 microns.
Ces particules sont ensuite enrobées avec de la graisse de palme dont le point de fusion est d'environ 58°C.
Le produit final ainsi obtenu a une densité autour de 0,5 $g/cm^3$. Il est composé de particules dont 85% ont entre 400 et 1600 microns.
Ce produit est dénommé NR/NN1.

Point h)

On applique la méthode II au produit NR/NN1, ce qui conduit aux résultats suivants :

CDC présent dans le produit au départ = 0.06 g
CDC présent dans le produit après 6h = 0.007 g

$$DRNN-E = ((0.06-0.007) \div 0.06)) \times 100 = 88\%.$$

Point i)

Le résultat de DRNN-E est supérieur à la valeur seuil (60%). On retourne au point e).

Points e) f) g)

Afin d'augmenter la libération des non-nutriments (ici CDC) après le rumen, un autre produit est développé et fabriqué en deux étapes.
Le produit NR/NN1 précédemment décrit (22% d'oléorésine de capsicum dans une matrice de 78% d'huile de colza hydrogénée) forme un noyau qui est enrobé grâce à une technique d'atomisation à froid au moyen d'une matrice de 30% d'huile de palme. Le résultat est NR/NN2 qui contient 15,4% d'oléorésine de capsicum.

Point h)

On applique la méthode II au produit NR/NN2, ce qui conduit aux résultats suivants :

CDC présent dans le produit au départ = 0.045 g
CDC présent dans le produit après 6h = 0.02 g

$$DRNN\text{-}E = ((0.045-0.02) \div 0.045)) \times 100 = 55\%.$$

Point i)

Le résultat de DRNN-E est inférieur à la valeur seuil (60ô). NR/NN2 est adopté pour préparer des particules à utiliser comme additif alimentaire.

## Exemple 2

Cet exemple illustre l'efficacité de l'additif alimentaire selon l'invention sur les performances zootechniques de vaches laitières.

L'effet du produit NR/NN2 sur les performances animales a été déterminé sur des vaches laitières de race Holstein recevant une alimentation sans produit ou une alimentation avec 100 mg par jour de NR/NN2 apportant 15,4 mg/jour d'oléorésine de capsicum. Il est à noter que cette dose est très faible en comparaison avec la consommation d'aliment d'environ 30 kilogrammes de matière sèche par jour d'une vache laitière, puisqu'elle correspond ainsi à teneur de 0,5 ppm par rapport à la ration alimentaire quotidienne.

Les résultats sont présentés dans le tableau suivant :

| | Traitement[1] | | Valeur P |
|---|---|---|---|
| | Témoin | NR/NN2 0,5ppm | |
| Matières sèche ingérée, | 29,1 | 30,0 | 0,22 |
| Production laitière, kg/j | 41,1 | 44,6 | 0,02 |
| Efficacité alimentaire, | 1,41 | 1,49 | <0,01 |

[1]Témoin, 0 mg/j NR/NN2; NR/NN2 100 mg/j de produit capsicum rumen protégé (15,4% oléorésine de capsicum)
[2]Production laitière ÷ Matière sèche ingérée

On constate que l'incorporation de NR/NN2 dans l'alimentation améliore la production de lait et l'efficacité alimentaire. La quantité de matière sèche consommée n'est pas affectée.

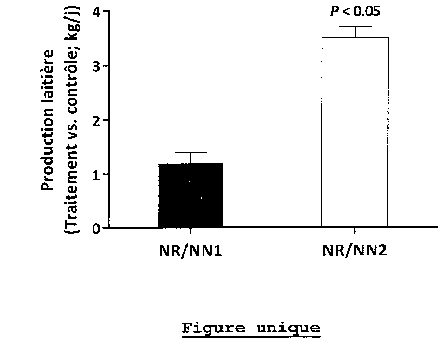

Un essai similaire a été effectué avec le NR/NN1 à raison de 7,3 ppm d'oléorésine de capsicum. Les résultats de production en réponse à NR/NN1 et NR/NN2 ont été comparés dans la figure 1.

Il ressort de la figure 1 que le produit protégé de la libération / dégradation dans le rumen, NR/NN2, est nettement plus efficace pour augmenter la production de lait et l'efficacité alimentaire que le produit NR/NN1.

Les inventeurs ont été surpris de constater que les 0,5 ppm d'oléorésine de capsicum apportés par NR/NN2 sont très largement plus efficaces pour augmenter la production de lait et l'efficacité alimentaire que les 7,3 ppm d'oléorésine de capsicum apporté par NR/NN1 malgré une dose environ 15 fois inférieure.

## Exemple 3

Cet exemple illustre que l'effet de l'additif alimentaire selon l'invention sur les performances zootechniques de vaches laitière est le résultat d'une réponse non nutritionnelle. Précisément, l'exemple démontre que l'effet est contrôlé par une réponse hormonale au produit NR/NN2.

On évalue en général l'effet des extraits de plante sur la base de leur effet antimicrobien et de leur capacité à modifier les fermentations ruminales au bénéfice du ruminant.

Afin de comprendre comment malgré une dose 15 fois inférieure, NR/NN2 est presque 5 fois plus efficace pour ce qui est de la production laitière que NR/NN1, les inventeurs ont cherché à comprendre les mécanismes sous-jacents à cette réponse.

L'effet du produit NR/NN2 sur le métabolisme énergétique est déterminé sur des vaches Holstein exposées à un test de tolérance au glucose. Du glucose est injecté en intraveineuse et 10 échantillons de sang sont prélevés pendant une période de 110 minutes puis analysés pour le contenu de glucose et d'insuline dans le sérum. Les résultats sont regroupés dans le tableau suivant :

|  | Traitement[1] | | Valeur P |
|---|---|---|---|
|  | Témoin | NR/NN2, 0.5 ppm |  |
| Glucose$_{0\text{-}110min}$, mg/dL | 133 | 126 | 0,17 |
| Insuline$_{-110min}$, $\mu$IU/mL | 32,9 | 21,4 | 0,16 |
| Insuline ASC[2], $\mu$IU/mL*min | 1762 | 1249 | 0,04 |

[1]Témoin, 0 mg/j NR/NN2; NR/NN2, 100 mg/j de produit capsicum rumen protégé (15,4% oléorésine de capsicum)
[2]Aire sous la courbe

Les résultats indiquent que NR/NN2 augmente la sensibilité à l'insuline, comme le montre l'augmentation de la vitesse de disparition de glucose et les concentrations réduites d'insuline dans le sérum.

Cela démontre que le fait d'apporter un non nutriment en aval du rumen permet d'améliorer la production zootechnique sans effet nutritionnel direct. Ici la réponse est en partie contrôlée par une réponse hormonale.

**Exemple 4**

Cet exemple illustre que l'effet de l'additif alimentaire selon l'invention sur les performances zootechniques de vaches laitière est le résultat d'une réponse non nutritionnelle. Précisément, l'exemple démontre que l'effet est contrôlé par une réponse immunitaire au produit NR/NN2.

L'effet du produit NR/NN2 sur l'immunité de l'animal est déterminé sur des vaches Holstein exposées à des lipopolysaccharides (LPS) afin de mimer une infection à *Escherichia Coli.* Pour le test, LPS (*Escherichia coli* 0111:B4; 1.0 $\mu$g/kg poids d'animal) était dissous dans 100 ml de solution saline stérile à 0.9 %. La solution était injectée dans la veine jugulaire à un taux de 1 ml/min à l'aide d'un tube stérile avec des pompes péristaltiques pendant 100 min. La production laitière était mesurée deux fois par jour pendant 6 jours, et les échantillons de sang étaient recueillis 0, 2, 4, 8 et 24 h après l'injection. Les résultats sont présentés dans le tableau suivant :

|  | Traitement[1] | | Valeur P |
|---|---|---|---|
|  | Témoin | 0.5 ppm NR/NN2 |  |
| Production laitière, kg/j |  |  |  |
| Avant exposition à LPS | 41,1 | 44,6 | 0,02 |
| Jour 2 après exposition à | 26,0 | 30,0 | <0,05[2] |
| LPS Jour 6 après expo. à LPS | 34,2 | 37,2 | <0,05[2] |
| Cortisol sérique, pg/dL | 4,23 | 2,98 | 0,03 |

[1]Témoin, 0 mg/j NR/NN2; NR/NN2, 100 mg/j de produit capsicum rumen protégé (15,4% oléorésine de capsicum)
[2]Interaction traitement * jour

On constate que la production de lait après l'exposition est réduite dans les groupes d'animaux avec ou sans NR/NN2. Toutefois, les vaches supplémentées avec NR/NN2 ont eu un plus prompt rétablissement.

Le niveau de cortisol du sérum diminue lors de l'alimentation avec NR/NN2, indiquant que les animaux répondaient mieux à cette exposition.

Ces études de mécanisme révèlent que, contrairement à ce à quoi l'on pouvait s'attendre, des non-nutriments (ici des extraits de plante) libérés après le rumen sont capables d'interagir directement de façon non-nutritionnelle avec le métabolisme et l'immunité de l'animal. Cette interaction directe permet une amélioration considérable de l'efficacité du produit.

**Revendications**

1. Additif alimentaire contenant au moins un non-nutriment incorporé dans une matrice, l'ensemble étant encapsulé par un enrobage comprenant au moins une matière végétale dont l'indice de saponification est supérieur à 180 et le non-nutriment comprenant de l'oléorésine de capsicum, **caractérisé en ce que** la matrice comprend une graisse hydrogénée.

2. Additif alimentaire selon la revendication 1, dans lequel ledit indice de saponification est supérieur à 190.

3. Additif alimentaire selon l'une des revendications 1 à 2, dans lequel l'enrobage comprend de l'huile de palme.

4. Additif alimentaire selon l'une des revendications 1 à 3, dans lequel la matrice comprend de l'huile de colza hydrogénée.

5. Additif alimentaire selon l'une des revendications 1 à 4, dans lequel la teneur de l'additif alimentaire en non-nutriments est d'au moins 5% et d'au plus 70% en poids.

6. Utilisation non-thérapeutique d'un additif alimentaire selon l'une des revendications 1 à 5 pour améliorer les performances zootechniques d'un ruminant.

7. Utilisation non-thérapeutique selon la revendication 6, dans laquelle les performances zootechniques sont l'une au moins des performances suivantes : la production laitière, la qualité du lait, la modification de la composition du lait, la modification de la consommation d'aliment, la modification du comportement alimentaire, l'amélioration du gain de poids moyen, l'augmentation de l'efficacité alimentaire.

**Patentansprüche**

1. Nahrungsmittelzusatz, der mindestens einen in eine Matrix eingearbeiteten Nichtnährstoff enthält, wobei das Ganze durch eine Umhüllung eingekapselt ist, die mindestens ein pflanzliches Material mit einer Verseifungszahl von mehr als 180 und den Nichtnährstoff aufweist, der Capsicum-Oleoresin umfasst, **dadurch gekennzeichnet, dass** die Matrix ein hydriertes Fett aufweist.

2. Nahrungsmittelzusatz nach Anspruch 1, wobei die Verseifungszahl größer als 190 ist.

3. Nahrungsmittelzusatz nach einem der Ansprüche 1 bis 2, wobei die Umhüllung Palmöl aufweist.

4. Nahrungsmittelzusatz nach einem der Ansprüche 1 bis 3, wobei die Matrix hydrogeniertes Rapsöl umfasst.

5. Nahrungsmittelzusatz nach einem der Ansprüche 1 bis 4, wobei der Gehalt des Nahrungsmittelzusatzes an Nichtnährstoffen mindestens 5 Gew.-% und höchstens 70 Gew.-% beträgt.

6. Nicht-therapeutische Verwendung eines Nahrungsmittelzusatzes nach einem der Ansprüche 1 bis 5 zur Verbesserung der zootechnischen Leistung eines Wiederkäuers.

7. Nicht-therapeutische Verwendung nach Anspruch 6, wobei die zootechnische Leistung mindestens eine der folgenden Leistungen ist: Milchproduktion, Milchqualität, Änderung der Milchzusammensetzung, Änderung der Nahrungsaufnahme, Änderung des Essverhaltens, Verbesserung der durchschnittlichen Gewichtszunahme, Erhöhung der Nahrungseffizienz.

**Claims**

1. Food additive containing at least one non-nutrient incorporated in a matrix, the whole being encapsulated by a coating comprising at least one vegetable material whose saponification number is greater than 180 and the non-nutrient comprises capsicum oleoresin, **characterized in that** the matrix comprises a hydrogenated fat.

2. The food additive of claim 1, wherein said saponification number is greater than 190.

3. A food additive according to one of claims 1 to 2, wherein the coating comprises palm oil.

4. A food additive according to one of claims 1 to 3, wherein the matrix comprises hydrogenated rapeseed oil.

5. Food additive according to one of claims 1 to 4, wherein the content of non-nutrients in the food additive is at least 5% and at most 70% by weight.

6. Non-therapeutic use of a feed additive according to one of claims 1 to 5 to improve the zootechnical performance of a ruminant.

7. Non-therapeutic use according to claim 6, wherein the zootechnical performance is at least one of the following: milk production, milk quality, modification of milk composition, modification of feed consumption, modification of feeding behaviour, improvement in average weight gain, increase in feed efficiency.

**Figure unique**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008062368 A
- US 5676966 A
- EP 2088871 A
- US 20100055253 A